# EUROPÄISCHE PATENTSCHRIFT

(11) **EP 1 098 735 B1**
(45) Veröffentlichungstag und Bekanntmachung des Hinweises auf die Patenterteilung: **11.09.2002**
(21) Anmeldenummer: 99922096.5
(22) Anmeldetag: 14.04.1999
(51) Int. Cl.: B24B 47/12, B23Q 5/10, B24B 41/04, B24B 19/12

(54) **SCHLEIFSPINDELEINHEIT MIT MAGNETISCHEM ANTRIEB**
GRINDING SPINDLE UNIT WITH MAGNETIC DRIVE
ENSEMBLE BROCHE PORTE-MEULE A ENTRAINEMENT MAGNETIQUE

(30) Priorität: 23.07.1998 DE 19833241
(43) Veröffentlichungstag der Anmeldung: 16.05.2001
(73) Patentinhaber: Erwin Junker Maschinenfabrik GmbH, 77787 Nordrach (DE)
(72) Erfinder: JUNKER, Erwin, D-77815 Bühl (DE); LINDNER, Jürgen, D-63868 Grosswallstadt (DE)
(74) Vertreter: Leske, Thomas, Dr.
(86) Internationale Anmeldenummer: EP9902524
(87) Internationale Veröffentlichungsnummer: WO00005033

(56) Entgegenhaltungen:
- EP-A- 0 583 035
- WO-A-82/01149

## Beschreibung

Die Erfindung betrifft einen Antrieb für eine Schleifscheibe einer Nockenschleifmaschine, mit der Nocken mit konkaven Flanken ausgeschliffen werden können.

Zum Stand der Technik gehört das Schleifen von Nocken mit konkaven Flanken, wobei Schleifscheiben eingesetzt werden, deren Radius kleiner ist als der Krümmungsradius des Konkavbereiches der Nocken. So ist u.a. eine Maschine zum Schleifen von konkaven Flanken aufweisenden Nocken einer Nockenwelle unter Einsatz von drei Schleifscheiben bekannt. Die Maschine umfaßt einen auf dem Bett der Maschine radial zu der zu schleifenden Nockenwelle verfahrbaren Schlitten, auf dem zwei Schleifspindeln mit einer Vor- und einer Fertigschleifscheibe gelagert sind. Die beiden Schleifspindeln sind in einem gemeinsamen Spindelstock derart gelagert, daß die Spindelachsen sich unter einem Winkel schneiden oder parallel zueinander verlaufen. Der Spindelstock ist um eine senkrecht zur Nockenwelle verlaufende Achse verschwenkbar. Eine dritte Schleifscheibe, deren Durchmesser etwa dem doppelten Radius der konkaven Flanken der an der Nockenwelle zu schleifenden Nocken entspricht, ist neben der Fertigschleifscheibe auf deren Schleifspindel angeordnet. Dieser Stand der Technik enthält keine näheren Angaben über die Antriebsart der Schleifspindeln.

In DE 41 37 924 C2 ist eine Schleifmaschine vorbeschrieben, die nach dem Huckepack-Prinzip aufgebaut ist. Diese Maschine umfaßt einen ersten Schleifschlitten, der in einer Richtung senkrecht zur Längsachse der Nockenwelle beweglich ist und eine erste Schleifscheibe mit großem Durchmesser trägt. Auf dem ersten Schleifschlitten ist ein zweiter Schleifschlitten mit einer zweiten Schleifscheibe angeordnet, die einen kleineren Durchmesser aufweist als der Krümmungsradius der auszuschleifenden Nockenflanke eines Nockens. Auch dieser Stand der Technik enthält keine weiterreichenden Angaben zum Antrieb der Schleifspindel.

Aus DE 196 35 687 ist eine Nockenwellenschleifmaschine bekannt, bei der die Schleifspindeleinheit hydrodynamisch oder hydrostatisch gelagert ist.

Schließlich gehören Schleifmaschinen zum Stand der Technik, deren Schleifspindeln entweder einen Direktantrieb über einen HF-Schleifspindelmotor oder einen Riemenantrieb aufweisen. Die direkt mit einem HF-Motor angetriebenen Schleifsgindeln besitzen jedoch den Nachteil, daß die HF-Motoren aufgrund ihrer Baugröße nur begrenzte Abmessungen der Nockenwellen in Bezug auf deren Länge und des Nockenhubes in Bezug auf den Grundkreisradius zulassen. Die mit einem Riemenantrieb angetriebenen Schleifspindeln haben dagegen den Nachteil, daß nur begrenzte Leistungen bei vorbestimmten Riemenscheibendurchmessern übertragen werden können und der notwendigerweise vorhandene Riemen bei rechtwinkeliger Umlenkung wegen seiner Vorspannung hohe Radialkräfte auf das benachbarte Lager aufbringt.

Die WO-A-82/01149 offenbart einen Antrieb mit einem Elektromotor, einem Antriebsrad, einer spindel und einer Magnetkupplung zur übertragung der Antriebsmoments auf die Spindel.

Der Erfindung liegt die Aufgabe zugrunde, einen Antrieb für eine Schleifscheibe zu schaffen, mit dem die Nachteile des Direktantriebes mittels eines HF-Motors und die des Antriebes mittels eines Riemenantriebes behoben werden. Außerdem soll der Antrieb in unterschiedlichen Durchmesserverhältnissen und Längen herstellbar sein, damit Leistungs- und Drehzahlanforderungen in weiten Bereichen übertragbar werden.

Dieses Problem wird mit den Merkmalen des Patentanspruches 1 gelöst.

Die Merkmale der Unteransprüche 2 bis 7 gestalten die erfindungsgemäße Vorrichtung konstruktiv weiter aus.

Die Aufgabe wird nach der Erfindung in der Weise gelöst, daß der Antrieb der Schleifspindeleinheit zur Übertragung der Leistung und des Drehmoments mittels eines Schleifspindelmotors magnetisch erfolgt. Zu diesem Zweck ist ein Antriebsrad vorgesehen, das mit einem Antriebsmotor verbunden ist. Am Umfang des Antriebsrades sind gleichmäßig beabstandete Dauermagnetringe angeordnet, in deren Abstände Dauermagnetringe, die auf der Schleifspindeleinheit gleichmäßig beabstandet angeordnet sind, kämmend eingreifen. Die Dauermagnetringe des Antriebsrades und des Schleifspindelrotors sind berührungsfrei zueinander angeordnet. Der in axialer Richtung jeweils vorgesehene Luftspalt beträgt beispielsweise 0,05 bis 0,4 mm. Dabei greifen die auf dem Antriebsrad angeordneten Magnetringe in die von den gleichmäßig beabstandeten Magnetringen des Schleifringrotors gebildeten Räume ein und umgekehrt.

Nach einer Ausführungsform der Erfindung weist die Umfangsbreite des Antriebsrades radial umlaufend angeordnete, gleichmäßig beabstandete Einstiche auf, die an ihren Planseiten mit kleinen Dauermagneten belegt sind. Unter Berücksichtigung der Breite der mit Dauermagneten belegten Einstiche des Antriebesrades sind in diese Abstände passende Einstiche auf der Umfangsbreite des Schleifspindelrotors vorgesehen, die ebenfalls an den Planseiten mit Dauermagneten seitlich belegt sind. Auch diese Konstruktion berücksichtigt, daß die ringförmigen, mit Dauermagneten belegten Planseiten der Einstiche bei der Drehmomentübertragung sich nicht berühren, d.h. einen Abstand zueinander aufweisen. Auch bei dieser Konstruktion beträgt der Luftspalt in axialer Richtung beispielsweise 0,05 bis 0.4 mm.

Die Mittelachse des Antriebsmotors und des Antriebsrades sind miteinander fluchtend und parallel zur Mittelachse des Schleifspindelrotors angeordnet. Die Mittelachse des Schleifspindelrotors ist vorzugsweise wiederum in horizontaler und vertikaler Ebene parallel zur Mittelachse der Nockenwelle angeordnet.

Der Antriebsmotor mit Antriebsrad sowie der Schleifspindelrotor sind jeweils in einem Gehäuse angeordnet, die miteinander mittels Schrauben verbunden sind. Diese beiden miteinander verbundenen Gehäuse sind an einem in X-Achsrichtung verfahrbaren Schleifspindelstockgehäuse befestigt. An dem einen freien Ende des Schleifspindelrotors befindet sich die Schleifscheibe. Die beiden Endbereiche des Schleifspindelrotors sind in spielfrei vorgespannten Wälzlagerpaketen gelagert, wobei das schleifscheibenseitige Ende des Schleifspindelrotors als Festlagereinheit und das gegenüberliegende als Loslagereinheit dient.

Die komplette Schleifspindeleinheit umfaßt ein Gehäuse, das dünnwandig ausgeführt ist, damit noch ausreichend Platz gegenüber nebenstehenden Nocken einer Nockenwelle vorhanden ist; denn die benachbart auf der Nockenwelle angeordneten Nocken weisen aufgrund unterschiedlichen Winkellagen der Nocken auf der Nockenwelle einen gegenüber dem Nockengrundkreis vergrößerten Umlaufradius auf.

Die komplette, zur Nockenwelle hin eingehauste, an dem Gehäuse befestigte Schleifspindeleinheit ist komplett durch andere Schleifspindeleinheiten austauschbar. Auf diese Weise ist es möglich, daß Schleifspindeleinheiten mit unterschiedlicher Größe, d.h. Baugrößenabstufung, für unterschiedliche Anwendungsfälle zum Einsatz kommen, weil zu der Lagerung und zu der Schleifspindeleinheit keine Versorgungsleitungen führen. Damit ist der Vorteil verbunden, daß unterschiedliche Anwendungsfälle beim Schleifen, insbesondere in Bezug auf den Schleifscheibendurchmesser, unterschiedliche Schleifspindeleinheiten durch einfaches Austauschen umrüstbar sind. In Abhängigkeit von dem vor Ort zu lösenden Schleifproblem kann daher die jeweils passende Schleifspindeleinheit eingesetzt werden, wobei das Verhältnis der Durchmesser des Antriebsrades und des Schleifspindelrotors das Übersetzungsverhältnis bestimmen. Bei einer Vergrößerung des Durchmessers des Schleifspindelrotors wird das übertragbare Drehmoment vergrößert; denn beim Einsatz von größeren Schleifscheiben muß auch ein größeres Drehmoment zur Verfügung stehen.

Der erfindungsgemäße Antrieb wird anhand der Zeichnungen gemäß den Fig. 1 bis 4 näher erläutert.
- Fig. 1: zeigt einen Teillängsschnitt des mit dem Antriebsmotor verbundenen Antriebsrades mit einem parallel dazu am Umfang kämmend angeordneten Schleifspindelrotor und einer dazu ebenfalls parallel angeordneten Nockenwelle;
- Fig. 2: zeigt den konstruktiven Aufbau gemäß Fig. 1 in Verbindung mit dem in der X-Achse arbeitenden Schleifspindelstock;
- Fig. 3: zeigt einen vergrößerten Querschnitt B-B gemäß Fig. 2; und
- Fig. 4: zeigt den konstruktiven Aufbau im Teillängsschnitt einer wälzgelagerten Spindeleinheit mit magnetisch angetriebenem Motor.

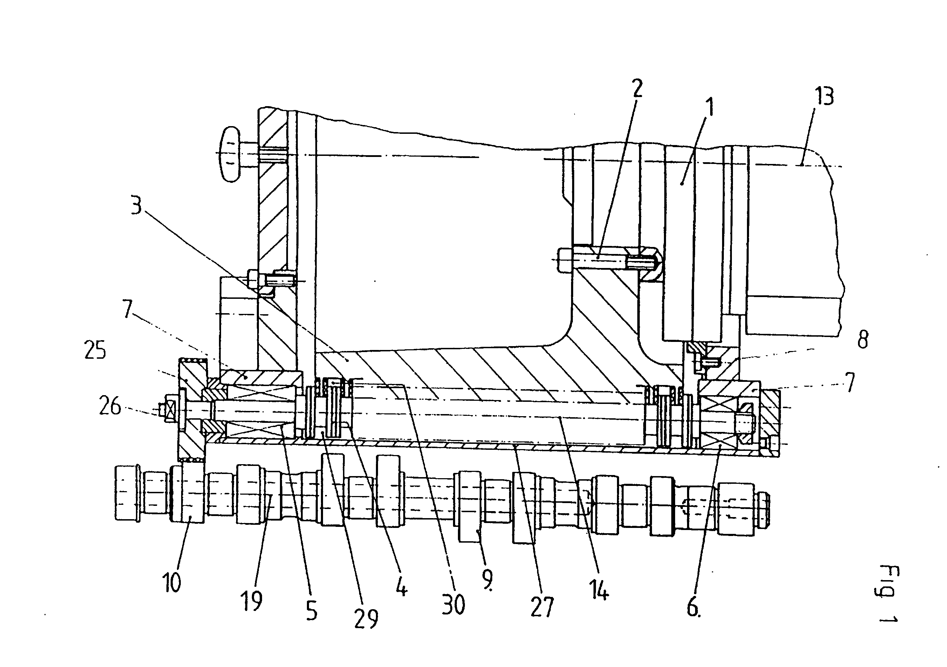

In Fig. 1 ist in einem Teillängsschnitt eine jeweils endseitig wälzgelagerte Schleifspindeleinheit 7 mit magnetisch angetriebenem Schleifspindelrotor 4 dargestellt, auf dessen Umfangsoberfläche gleichmäßig beabstandete, ringförmige Dauermagnete 23 angeordnet sind. In die von den Dauermagneten 23 gebildeten Freiräume greifen mit geringem Spiel gleichmäßig beabstandete, ringförmige Dauermagnete 22 ein, die auf der Umfangsoberfläche eines Antriebsrades 3 angeordnet sind. Das Antriebsrad 3 ist wiederum mit einem Antriebsmotor, der beispielsweise ein Elektromotor sein kann, verbunden. Bei laufendem Antriebsrad 3 kämmen die Dauermagnete 22 und 23 zueinander, so daß eine magnetische Drehmomentübertragung auf den Schleifspindelrotor 4 erreicht wird. Die Verbindung des Antriebsrades 3 mit dem Antriebsmotor 1 erfolgt über Schrauben 2. Aus dieser Anordnung ergibt sich das Übersetzungsverhältnis aus dem Durchmesserverhältnis des Antriebsrades 3 und des Schleifspindelrotors 4.

Nach einer Ausführungsform der Erfindung weist der Außenumfäng des Antriebsrades 3 radial umlaufend aus dem Körper des Antriebsrades 3 spanend herausgearbeitete radial abstehende, ringförmige Einstiche 30 auf, deren Planseiten mit kleinen Dauermagneten 22 belegt sind. Auch der Schleifspindelrotor 4 trägt durch Zerspanung herausgearbeitete, radial abstehende ringförmige Einstiche 29, deren Planseiten mit kleinen Dauermagneten 23 belegt sind. Die Einstiche 30 und 29 sind über die Umfangsbreite gleichmäßig beabstandet so angeordnet, daß beim Zusammenbau diese ringförmigen mit Dauermagneten 22 und 23 belegten Einstiche 29 und 30 eine berührungsfrei kämmende Anordnung gewährleisten. Auf diese Weise wird das Drehmoment des Antriebsrades 3 auf den Schleifspindelrotor 4 magnetisch übertragen.

Der Schleifspindelrotor 4 trägt an einem freien Ende eine Schleifscheibe 25, die endseitig mit einer Schraube 26 auf dem Schleifspindelrotor gesichert ist. Ausgehend von der Schleifscheibe 25 ist unmittelbar in axialer Richtung eine Festlagereinheit 5 vorgesehen, die beispielweise ein spielfrei vorgespanntes Wälzlagerpaket sein kann, das in dem der Schleifscheibe zugewandten Bereich des Gehäuses 7 angeordnet ist. Am gegenüberliegenden Ende des Schleifspindelrotors 4 ist eine Loslagereinheit 6 vorgesehen, die beispielsweise ebenfalls ein spielfrei vorgespanntes Wälzlagerpaket sein kann, das ebenfalls in dem der Schleifscheibe gegenüberliegenden Bereich des Gehäuses 7 angeordnet ist. Zwischen der Festlagereinheit 5 und der Loslagereinheit 6 sind auf der Umfangsoberfläche des Schleifspindelrotors 4 die gleichmäßig beabstandeten ringförmigen Dauermagnete 23 angeordnet. Parallel zu der elektromotorischen Antriebsanordnung, bestehend aus Antriebsmotor 1, Antriebsrad 3, Schleifspindeleinheit 7 mit Schleifspindelrotor 4 in kämmender Anordnung mit ringförmig angeordneten Dauermagneten 22, 23, ist eine Nockenwelle 9 vorgesehen.

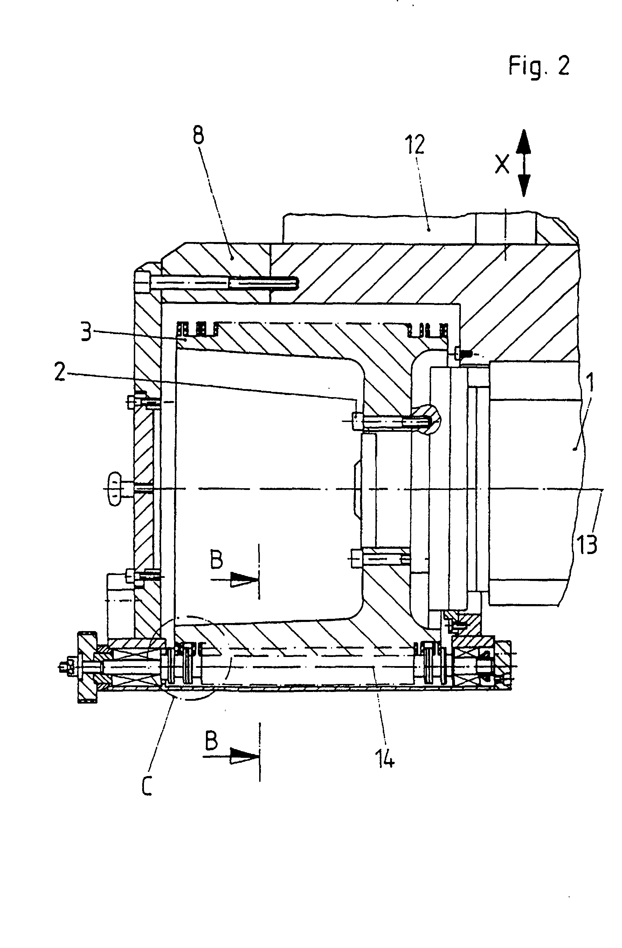

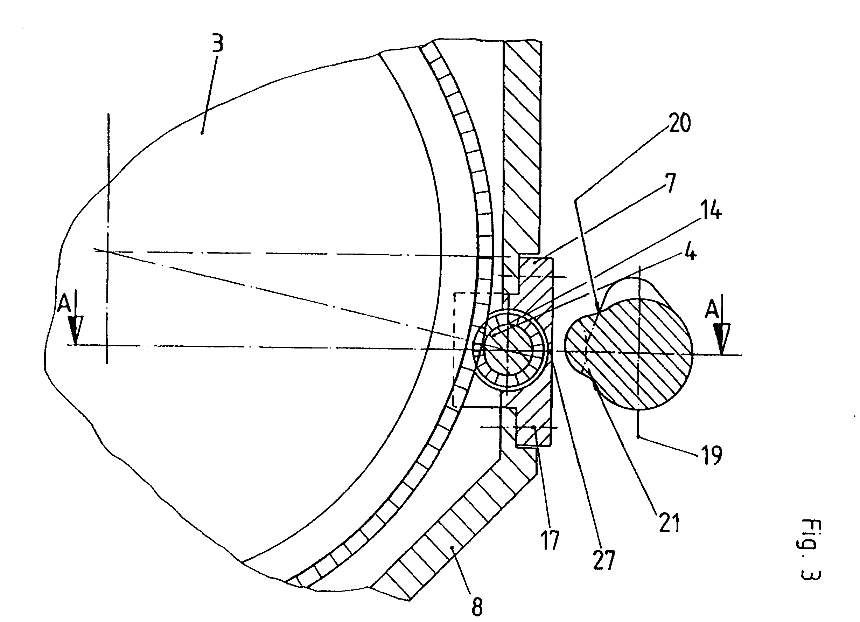

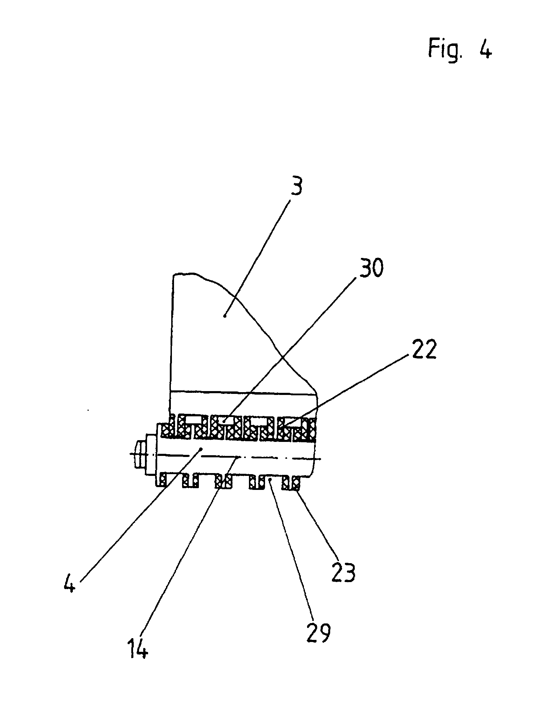

Fig. 2 zeigt das Antriebsrad 3, das mittels Schrauben 2 an dem Antriebsmotor 1 befestigt ist. Ferner ist das Gehäuse für das Antriebsrad 3 und den Antriebsmotor 1 in Ankopplung an einen Schleifspindelstock 12 mit der CNC-Bewegungsachse X dargestellt. Ferner zeigt diese zeichnerische Darstellung einen Hinweis auf eine Schnittdarstellung B-B mit der Bezeichnung C, wie sie in Fig. 3/4 enthalten sind. Das Antriebsrad 3 ist axial fluchtend, der Mittelachse 13 folgend, an dem Antriebsmotor 1 mittels Schrauben 2 befestigt. Parallel zu dieser Mittelachse 13 ist der Schleifspindelrotor, der einseitig endseitig mit einer Schleifscheibe 25 versehen ist, angeordnet, wie dessen Mittelachse 14 nachweist.

Fig. 3 zeigt die Darstellung des Schnittes B-B gemäß Fig. 2. Danach ist eine im Durchmesser des Schleifspindelrotors 4 angepaßte, sich über die gesamte Länge des Schleifspindelrotors 4 erstreckende Halbschale des Gehäuses 7 vorgesehen, dessen beidseitiger Befestigungsflansch in entsprechende Aussparungen des Gehäuses 8 einsetzbar ist, mit dem der Antrieb 1 und das Antriebsrad 3 eingehaust sind. Das Gehäuse 7 ist mit Schrauben 17 mit dem Gehäuse 8 verbunden. Die Außenschale des Gehäuses 7 weist einen dünnwandigen Bereich 27 auf. Die Festlagereinheit 5 und die Loslagereinheit 6 sind zusätzlich jeweils in einer zweiten Halbschale 7. Die Mittelachse 14 steht parallel zu der gemeinsamen Mittelachse 13 des Antriebes 1 und des Antriebsrades. Aus der zugeordneten Schnittdarstellung der Nockenwelle 9 ist in Schnittdarstellung eine Nocke mit gegenüberliegenden konkaven Flankenbereichen 20 und 21 dargestellt. Außerdem ist in Fig. 3 der Schnitt A-A, wie er in Fig. 1 dargestellt ist, enthalten.

Fig. 4 zeigt schließlich einen Teilschnitt über die kämmende Anordnung der einerseits auf der Umfangsbreite des Antriebsrades 3 gleichmäßig beabstandeten ringförmigen Dauermagnete 22 und die von der Umfangsoberfläche des Schleifspindelrotors radial abstehenden ringförmigen Dauermagnete 23, die zwischen den Dauermagneten 22 des Antriebsrades 3 kämmend angeordnet sind. Außerdem ist dieser Darstellung zu entnehmen, daß über den Oberflächenbereich des Antriebsrades spanend herausgearbeitete Einstiche radial gleichmäßig beabstandet abstehend geschaffen sind, die an ihren Planseiten mit kleinen Dauermagneten 22 belegt sind. Die Einstiche 30 sind also ringförmig beidseitig mit Dauermagneten 22 beschichtet bzw. damit beklebt. In analoger Weise ist auch der Schleifspindelrotor 4 mit gleichmäßig beabstandeten, zerspanend herausgearbeiteten Einstichen 29 versehen, die ebenfalls an ihren Planseiten mit kleinen Dauermagneten 23 belegt bzw. beklebt sind. Die Planseiten können nach einer Ausrührungsform der Erfindung mit Dauermagneten 22 und 23 beklebt sein oder mit einer Dauermagnet-Sintermetallegierung beschichtet sein.

## Patentansprüche

1. Antrieb für eine Schleifscheibe einer Nockenschleifmaschine, **gekennzeichnet durch**
einen Elektromotor mit einem Antriebsrad , wobei
das Antriebsrad mit gleichmäßig beabstandeten ringförmigen Einstichen versehen ist und
die ringförmigen Einstiche auf den Radialflächen mit Dauermagneten bestückt sind,
einen Schleifspindelrotor mit gleichmäßig beabstandeten ringförmigen Einstichen wobei
die Radialflächen der ringförmigen Einstiche mit Dauermagneten bestückt sind und
die ringförmigen mit Dauermagneten bestückten Einstiche des Antriebsrades und des Rotors miteinander kämmend in Eingriff stehen.

2. Antrieb nach Anspruch 1, **dadurch gekennzeichnet, daß** der Antriebsmotor und das Antriebsrad eine Einhausung aufweisen,
daß die Einhausung im Bereich der Anordnung des Schleifspindelrotors eine der Schleifspindellänge und dem Durchmesser entsprechende Öffnung aufweist,
daß der Schleifspindelrotor ein Teilgehäuse aufweist,
daß der Schleifspindelrotor jeweils endseitig in dem Teilgehäuse gelagert ist, und
daß das Teilgehäuse auf die Öffnung des Antriebsgehäuses passend auswechselbar montierbar ist.

3. Antrieb nach den Ansprüchen 1 und 2, **dadurch gekennzeichnet, daß** der Schleifspfindelrotor an einem Ende eine Schleifscheibe trägt.

4. Antrieb nach den Ansprüchen 1 bis 3, **dadurch gekennzeichnet, daß** der Schleifspindelrotor in dem Teilgehäuse schleifscheibenseitig in einer Festlagereinheit und an seinem anderen Ende in einer Loslagereinheit gelagert ist.

5. Antrieb nach den Ansprüchen 1 bis 4, **dadurch gekennzeichnet, daß** die Festlagereinheit und die Loslagereinheit jeweils als spielfrei vorgespannte Wälzlagerpakete ausgeführt sind.

6. Antrieb nach den Ansprüchen 1 bis 5, **dadurch gekennzeichnet, daß** der Schleifspindelrotor eine Spindelnase aufweist, auf der eine Schleifscheibe mittels eines Befestigungselements befestigbar ist.

7. Antrieb nach den Ansprüchen 1 bis 6, **dadurch gekennzeichnet, daß** die Schleifspindeleinheit als Wechselspindeleinheit in unterschiedlichen Baugrößen austauschbar ausgeführt ist.

## Claims

1. Drive for a grinding wheel of a cam grinding machine, **characterized by**
an electric motor with a drive wheel,
the drive wheel being provided with uniformly spaced-apart annular recesses, and
the annular recesses being fitted with permanent magnets on the radial surfaces,
a grinding spindle rotor with uniformly spaced-apart annular recesses,
the radial surfaces of the annular recesses being fitted with permanent magnets, and
the annular recesses, fitted with permanent magnets, of the drive wheel and the rotor meshing with one another.

2. Drive according to Claim 1, **characterized in that** the drive motor and the drive wheel have an enclosure, **in that** the enclosure, in the region of the arrangement of the grinding spindle rotor, has an opening corresponding to the grinding spindle length and the diameter, **in that** the grinding spindle rotor has a sectional housing, **in that** the grinding spindle rotor is mounted at each end in the sectional housing, and **in that** the sectional housing can be mounted in a suitably interchangeable manner on the opening of the drive housing.

3. Drive according to Claims 1 and 2, **characterized in that** the grinding spindle rotor carries a grinding wheel at one end.

4. Drive according to Claims 1 to 3, **characterized in that** the grinding spindle rotor is mounted in the sectional housing in a fixed bearing unit on the grinding-wheel side and in a floating bearing unit at its other end.

5. Drive according to Claims 1 to 4, **characterized in that** the fixed bearing unit and the floating bearing unit are each designed as rolling bearing assemblies preloaded free of play.

6. Drive according to Claims 1 to 5, **characterized in that** the grinding spindle rotor has a spindle nose, to which a grinding wheel can be fastened by means of a fastening element.

7. Drive according to Claims 1 to 6, **characterized in that** the grinding spindle unit is designed to be interchangeable as a change spindle unit in different sizes.

## Revendications

1. Entraînement pour une meule d'une machine à rectifier les cames, **caractérisé par**
un moteur électrique avec une roue d'entraînement, dans lequel
la roue d'entraînement est pourvue d'encoches annulaires placées à intervalles réguliers et
les encoches annulaires sont munies d'aimants permanents sur les surfaces radiales,
un rotor de broche porte-meule avec des encoches annulaires placées à intervalles réguliers, dans lequel
les surfaces radiales des encoches annulaires sont munies d'aimants permanents et
les encoches annulaires munies d'aimants permanents de la roue d'entraînement et du rotor s'engrènent les unes dans les autres à la manière de peignes.

2. Entraînement selon la revendication 1, **caractérisé en ce que** le moteur d'entraînement et la roue d'entraînement comportent un boîtier,
**en ce que** le boîtier comporte, dans la zone de l'emplacement du rotor de broche porte-meule, une ouverture correspondant à la longueur de la broche porte-meule et au diamètre,
**en ce que** le rotor de broche porte-meule comporte un boîtier partiel,
**en ce que** le rotor de broche porte-meule est logé à chaque extrémité dans le boîtier partiel, et
**en ce que** le boîtier partiel peut être monté sur l'ouverture du boîtier d'entraînement de manière à pouvoir être commodément remplacé.

3. Entraînement selon les revendications 1 et 2, **caractérisé en ce que** le rotor de broche porte-meule porte une meule à une extrémité.

4. Entraînement selon les revendications 1 à 3, **caractérisé en ce que** le rotor de broche porte-meule est logé, dans le boîtier partiel, dans une unité de palier fixe du côté de la meule et dans une unité de palier libre à son autre extrémité.

5. Entraînement selon les revendications 1 à 4, **caractérisé en ce que** l'unité de palier fixe et l'unité de palier libre sont formées respectivement comme des groupes de paliers à roulement pré-tendus sans jeu.

6. Entraînement selon les revendications 1 à 5, **caractérisé en ce que** le rotor de broche porte-meule comporte un taquet de broche sur lequel une meule peut être fixée à l'aide d'un élément de fixation.

7. Entraînement selon les revendications 1 à 6, **caractérisé en ce que** l'unité de broche porte-meule est conçue comme une unité de broche échangeable remplaçable en diverses tailles de construction.
